# EUROPEAN PATENT APPLICATION

(11) **EP 4 535 183 A1**
(43) Date of publication of application: **09.04.2025**
(21) Application number: 23201712.9
(22) Date of filing: 04.10.2023
(51) Int. Cl.: G06F 16/185, G06F 16/16, G06F 16/17

(54) **IMPROVEMENTS IN AND RELATING TO FILE STORAGE**

(71) Applicant: Petagene Ltd., Suffolk CB9 8AD (GB)
(72) Inventor: GREENFIELD, Daniel, Haverhill, Suffolk CB9 8AD (GB); MRKONJIC, Goran, Zvezdara, Beograd 11000 (RS)
(74) Representative: Mewburn Ellis LLP

(57) **Abstract**

A file storage system implemented by a computer for storing files comprising data and associated metadata. A file-oriented storage system comprises a storage medium configured to store metadata of said files within a hierarchical file structure therein. An object-oriented storage system comprises a storage medium configured to store said data of said files as objects therein. A processor is configured to anticipate a use of a stored file via the file-oriented storage system and to:
migrate to the object-oriented storage system the data of the file if such use is not anticipated thereby storing the data of the file within the object-oriented storage system instead of within the file-oriented storage system; or,
migrate to the file-oriented storage system the data of the file if such use is anticipated thereby storing the data of the file within the file-oriented storage system instead of within the object-oriented storage system.

## Description

### Field of the Invention

The present invention relates to file storage methods, systems and apparatus, and particularly although not exclusively to object-oriented (or object-based) and file-oriented (or file-based) data storage methods, systems and apparatus.

### Background

File-oriented (or file-based) storage systems employ a format to store and manage data as a hierarchical tree structured as a file hierarchy in which files are identifiable in a directory structure. File systems store data as a set of individual file paths. Each file path is a string of characters that uniquely identifies the file in a directory structure. These unique identifiers may include the file name, the file extension (e.g., ".JPG" for a JPEG file), and the path of the file. A file-oriented storage system controls the storage, retrieval, and display of the data within a file in this way. Extensions indicate the format of data contained in the file, for example, .txt, .png, .java, .html, doc, etc. A directory structure defines how a file system arranges files to make them accessible to the user.

Files and directories are identifiable in a directory structure, such as the following simple example showing a file-oriented storage of notional image files and video files:

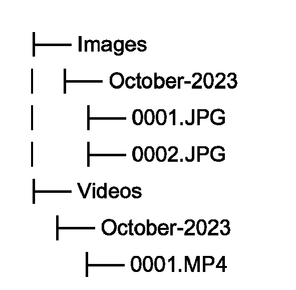

A directory is an unordered container that holds files ('0001.JPG', '0002.JPG', '0001.MP4') and subdirectories ('Images', 'Videos', 'March-2022'). The result is a nested hierarchical system of organizing files, rooted in a single top-level directory.

In contrast to this, object-oriented (or object-based) storage systems use an architecture that manages and manipulates data stored as distinct units, called objects. These objects are kept in a single store (sometimes referred to as a 'bucket') and are not arranged in files inside other folders. Instead, object-oriented storage combines the pieces of data that make up a file, adds all its relevant metadata to that file, and attaches a unique identifier to the object (UIDO). Object storage enables capabilities like interfaces that are directly programmable by an application, with access to the storage device by way of a standard object interface. Object-oriented storage is particularly, although not exclusively, suitable for unstructured data in which data is written once and read once or many times. Examples include online content, data backups, image archives, videos, pictures, and music files, which can be stored as objects. By comparison, a file-oriented storage system stores data as a single piece of information in a folder to organize it among other data, in a hierarchical structure. When a user requires access to a file, a computer system requires the path to find it. However, instead of organizing files in a directory hierarchy, object storage systems store files in a flat organization of containers, called "buckets" (e.g., in the Amazon AWS S3 system) and use unique IDs (e.g., called "keys" in the Amazon AWS S3 system) to retrieve them. Buckets are logical containers for storing objects. Users or systems may create buckets as needed within a storage region. A bucket is associated with a single compartment that may have policies that determine what actions a user can perform on a bucket and on all the objects in the bucket. The "inode" (index node) is a data structure in a Unix-style file-oriented storage system. It is used to describe a file-oriented storage system entity (sometimes confusingly referred to as an "object") such as a file or a directory. Each "inode" stores the attributes and disk block locations of the file storage entity's data. File-oriented storage system entity attributes may include metadata (times of last change, access, modification), as well as owner and permission data. However, it is to be understood that although an "inode" relates to a file-oriented storage system entity, sometimes confusingly referred to as an "object", this nomenclature does not mean that the "inode" is any part of object-oriented storage. It is not, and this fact is very well known in the art. A directory is a list of "inodes" with their assigned names. Thus, systems using "inodes", such as the file-oriented storage system disclosed in patent application document US2016/283501A1, are examples of file-oriented storage systems and are not examples of object-oriented storage systems. An example of object-oriented (or object-based) storage may be found at: https://www.ibm.com/cloud/learn/object-storage.

Object-oriented storage, often also referred to as object-based storage, is a data storage architecture for handling large amounts of unstructured data. Object-oriented storage has many fundamental differences to file-oriented storage. These include, but are not limited to, the following:
(a) Object-oriented storage does not use "inodes". As a result of this, object- oriented storage does not have a hierarchy of folders/directories. Note that file-oriented storage systems using "inodes" require the "inodes" to point to other "inodes" in a graph structure.
(b) Object-oriented storage does not support in-place modification/updates of object data. Instead, changes made to data in object-oriented storage require that the entire object is overwritten from start to end. Note that file-oriented storage systems using "inodes" require mutable block pointers inside "inodes" that can be updated to point to new/modified data blocks.
(c) Object-oriented storage typically uses efficient erasure-coding for storage whereas file-oriented storage systems typically use RAID ("Redundant Array of Independent Disks").
(d) Object-oriented storage, unlike file-oriented storage, can readily scale to exabytes of storage. Due to its very different data storage structure and more scalable organisation, Object-oriented storage typically has much higher latencies than file storage. As a result of improved efficiencies, object-oriented storage is typically less expensive to purchase, maintain and scale than file-oriented storage.
(e) Applications may access object-oriented storage directly via RESTful APIs, rather than through the operating system's filesystem support requiring 'syscalls'. A RESTful API is an architectural style for an application program interface (API) that uses HTTP requests to access and use data.

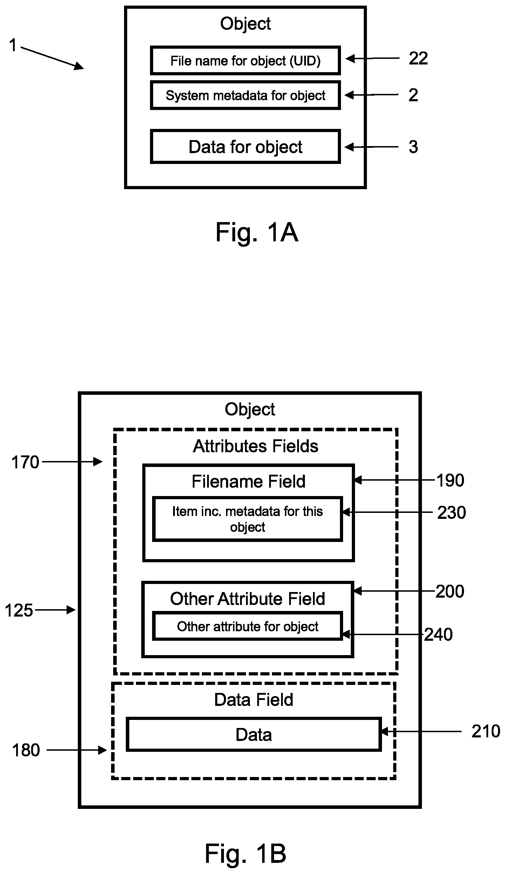

Any type of data, regardless of content type, may be stored as an object. Figure 1 shows an example of this in which an object 1 typically includes the stored file data itself 3 (e.g., text, images, video, etc.), a file name (UID) 22 used to identify the object, and an amount of metadata 2 comprising attributes of the object created by the object storage system, such as object size, object access permissions and object creation time, etc. Each object therefore has both data (e.g., an uninterpreted sequence of bytes) and metadata (e.g., an extensible set of attributes describing the object) and is typically stored in an associated bucket with other objects.

Object-oriented storage systems often explicitly separate file metadata from data. Some distributed file systems use an object-oriented architecture, where file metadata is stored in metadata servers and file data is stored in object-oriented storage servers. File system client software interacts with these distinct servers and abstracts them to present a full object-oriented file system to users and applications. A command interface may include commands to create and delete objects, write bytes and read bytes to and from individual objects, and to set and get attributes on/from objects.

Access to an object within an object-oriented file system may be governed by a so-called access-control list (ACL). This is a list of permissions associated with an object that identifies which system processes, or system users, are granted access to objects. It also specified what operations are allowed on given objects. Each entry in an ACL may specify a subject (e.g., User#, or process#) and an operation (e.g., read, write etc.). As a simple example, a file object may have an ACL that contains:
User#1: read only.
User#2: read, write.

This would give User#2 permission to read and write the file and only give User#1 permission to read it.

Object-oriented storage systems and file-oriented storage systems have very different characteristics and internally are built very differently. Some differences are:
- File-oriented storage has a file hierarchy consisting of directories (folders) and subdirectories (subfolders) which can each in turn have files, whereas object storage is flat and has no actual hierarchy
- File-oriented storage has a minimum amount of metadata associated with each file and directory. For example, on Portable Operating System interface (POSIX) file systems, this may include three types of timestamps (i.e., 'time modified', 'time created' and 'time accessed') as well as User ID (UID), Group ID (GID), permissions, and other attribute bits (e.g., 'symbolic link', 'directory' bit, 'setuid' bit, 'setgid' bit, etc.).
- Object-oriented storage structures do not adhere to POSIX compatibility in its metadata and access control mechanisms (such as Access Control Lists). Nor does it adhere to Microsoft Windows software compatibility in its metadata and ACLs.
- While object-oriented storage such as Amazon AWS S3 provide ACLs for managing access control to objects within a bucket, these are not directly compatible with ACLs supported by file storage systems such as: POSIX ACLs, NFSv4 ACLs and Microsoft Windows ACLs.
- Object-oriented storage can have far higher throughput scalability than file-oriented storage.
- Object-oriented storage can easily scale-up and be thought of as a pool that can keep growing in size, whereas file-based storage is typically far more limited in scale by many orders of magnitude.
- When an application utilises object-based storage, it is generally accessed directly by the application e.g., via REST application programming interfaces (APIs) using HTTP or HTTPS web protocols. Representational State Transfer (REST) is a software architectural style created to guide the design and development of the architecture for the World Wide Web and is well known in the art. REST defines a set of constraints for how the architecture of an Internet-scale distributed media system, such as the World Wide Web, should behave. Conversely, when an application utilises file-oriented storage, it is generally required to obtain file access through kernel system calls which the operating system may then either directly access local disk storage, or translate into necessary file storage network protocols.
- Generally, object-oriented storage tends to have significantly lower cost per byte stored.
- Unlike file-oriented storage systems, object-oriented storage systems generally do not guarantee read-after-write consistency, such that as soon as an object has been written, these writes are immediately available to other processes and nodes to read.

Both object-native and file-native applications (e.g., POSIX-compatible) are unable to directly operate on the same pool of data with the same level of performance. In addition, the high-throughput performance of object-oriented storage, concurrently with the low-latency high lOPS performance (I/O Operations Per Second) of file-oriented storage, is not available. Also, coherent access-control across object-oriented and file-oriented interfaces is not available.

In practice, some existing solutions either require replication of data from object-oriented representation to file-oriented representation, or from file-oriented representation to object-oriented representation, or altematively need to run gateway servers that translate between these representations and become bottlenecks on performance and scalability. This replication requirement results in very poor scalability and performance, is generally incompatible with POSIX file access requirements.

High-performance file-oriented storage (HPFS) has the ability to deliver very high lOPS (I/O Operations Per Second), however it is very expensive and has problems scaling in volume size.

Object-oriented storage (OBJS) is generally not competitive in delivering high lOPS like high performance file storage, however it is capable of scaling to much larger storage volumes and delivering much higher overall throughput. It is also typically much less expensive than high performance file storage.

As a result, object storage when combined with a file system is typically used as an archival tier, whereby the file storage can operate under a REST application programming interface to communicate with the object storage so as to offload files from the file storage into object storage, and when needed, to bring them back into the file-oriented storage system, to serve to POSIX (i.e. file) workloads. This ensures that applications still have a POSIX interface, but unfortunately results in slow performance going to/from the object storage, and the object-oriented storage cannot be utilised for high throughput workloads.

Some applications need low latency, high lOPS (for example database applications) and some applications just need high throughput (for example Machine Leaming workloads).

The present invention has been devised in light of the above considerations.

### Summary of the Invention

In a first aspect, the invention may provide a file storage system implemented by a computer for storing files comprising data and associated metadata, the file storage system comprising:
a file-oriented storage system comprising a storage medium configured to store metadata of said files within a hierarchical file structure therein;
an object-oriented storage system comprising a storage medium configured to store said data of said files as objects therein;
a processor configured to anticipate a use of a stored file via the file-oriented storage system and to:
   migrate to the object-oriented storage system the data of the file if such use is not anticipated thereby storing the data of the file within the object-oriented storage system instead of within the file-oriented storage system; or,
   migrate to the file-oriented storage system the data of the file if such use is anticipated thereby storing the data of the file within the file-oriented storage system instead of within the object-oriented storage system.

The invention may thereby provide a hybrid file storage system that may allow direct interfacing of a workload (e.g., a POSIX workload) to both traditional file-oriented storage and to object-oriented storage. The file storage system may partition the file storage into a file-oriented part and an object-oriented part and assign the data of a file to either one of these partitions, as appropriate to an anticipated use of the data of the file. Each file in storage may be moved from one partition to the other as appropriate based on an anticipated use of the data of the file.

The processor may be configured such that, if the data of a file is located on object-oriented storage, the processor may convert file-oriented file operations (POSIX file operations, e.g., read/write etc.) into object-oriented storage equivalent file operations. In other words, file-oriented file operations (e.g., POSIX) and commands may be received or generated by the processor for performing a particular function or operation upon a file, and if the data of the file is stored on the object-oriented storage system, then the processor may convert file-oriented file operations (POSIX file operations) into object-oriented storage equivalent file operations for application to the object(s) within the object-oriented storage that contain the data of the file in question. This provides the ability to read/write in object-oriented storage directly, delivering high throughput to applications that need it.

The file storage system may be configured to store on the file-oriented storage system at least some (e.g., most) of the metadata of a file that is associated with the actual data of the file located on the object-oriented storage system as appropriate to whether or not a use of the file via the file-oriented storage system is anticipated.

By anticipate, it may be meant to regard as probable, or to expect or to predict. In this way, the invention may place the data of the file in a file-oriented storage system when it is considered probable, expected or predicted that a use of a stored file (e.g., use of its data) will arise via the file-oriented storage system thereby permitting more efficient usage of the data of the file, or alternatively the invention may place the data of the file in an object-oriented storage system when a use of a stored file via the file-oriented storage system is considered to be not probable, or not expected, or not likely(unlikely)/predicted thereby permitting more efficient storage of the data of the file by the object-oriented storage system.

It is to be understood that the processor may be configured to perform migration of the data of a file to the file-oriented storage system in response to an aforementioned anticipation of use without also being configured to perform migration of the data of a file to the object-oriented storage system in response to an anticipation of non-use in that way (i.e., such use not anticipated).

It is also to be understood that the processor may be configured to perform migration of the data of a file to the object-oriented storage system in response to an anticipation of non-use by the file-oriented storage system (i.e., such use not anticipated), without also being configured to perform migration of the data of a file to the file-oriented storage system in response to an anticipation of such use.

However, the processor may be configured to perform migration of the data of a file to the file-oriented storage system in response to an aforementioned anticipation of use, and concurrently also be configured to perform migration of the data of a file to the object-oriented storage system in response to an anticipation of non-use in that way (i.e., such use not anticipated).

Migration of the data of a file to the file-oriented storage system may comprise migrating the data of the file that is currently stored in the object-oriented storage system. In other words, migration may be from the object-oriented storage system into the file-oriented storage system. Migration of the data of a file to the object-oriented storage system may comprise migrating the data of the file that is currently stored in the file-oriented storage system. In other words, migration may be from the file-oriented storage system into the object-oriented storage system.

References herein to a 'use' of a stored file 'via' the file-oriented storage system may be considered to include a reference to at least any access to, or any request to access, the file that is made via the file-oriented storage system. A reference to 'use' in relation to a file may be considered to include a reference to a moving (in memory storage space), a manipulation causing a change in an attribute, a copying, an opening (e.g., for reading and/or writing of any part of the contents), access to, or other controlling or processing of the file.

By object-oriented storage system, it may be meant a data storage architecture which stores unstructured data (e.g., typically accessible by a REST API). The unstructured data being sectioned into objects, each object including the data, metadata, and a unique identifier. Data in an object-oriented storage system is obtained by using the unique identifier. Unlike a file-oriented storage system, the objects may be immutable and may only be replaced with new objects with the same unique identifier. By file-oriented storage system it may be meant a hierarchical data storage system where files are organised in folders, with the folders being organised under a hierarchy of directories and subdirectories. Data in a file-oriented storage system is obtained by using a path describing the location of the data within the file system.

References herein to an 'object' may be considered to include a reference to an encapsulation of both data (e.g., an uninterpreted sequence of bytes) and metadata (e.g., an extensible set of attributes describing the object). References herein to an 'object' may be considered to include a reference to discrete units of data that are stored in a structurally flat (i.e., unstructured) data environment. References herein to an object-oriented (or 'object-based') storage, and object-oriented (or 'object-based') storage systems, may be considered to include a reference to storage in which folders, directories, or complex hierarchies are not employed (in contrast to a file-based storage system) to store/locate an 'object' within the storage system. An 'object' may comprise a unique identifying (ID) number (i.e., instead of a file name and file path). This unique identifying (ID) number may provide information enabling an application to locate and access the 'object'. An 'object' may refer to a self-contained repository that may include the data and/or metadata (e.g., descriptive information associated with an object).

The processor may be configured to anticipate a use via the file-oriented storage system of a stored file according to a file access pattern of the file. Examples of relevant access patterns include but are not limited to: a frequency of use of a file (e.g., sufficiently frequent); a frequency of file access requests (e.g., sufficiently frequent); an access request (read or write) to a random portion of the file (e.g., apart from during creation of the file, e.g., with sufficient frequency); simultaneous multiple lock requests to the file (e.g., more than one process locking the same file); flush or fsync() commands (e.g., sufficiently frequent) applied to the file; a write operation applied to the file, or an action, that causes data within an object on the object-oriented storage system to be overwritten. Such commands may be more efficiently implemented when the data of the file in question is located on the file-oriented storage system.

The processor may be configured to monitor or detect the access patterns of files within the file storage system in order to detect a relevant such access pattern and to anticipate a use via the file-oriented storage system of a stored file accordingly. For example, the processor may be configured to identify certain operations as identifying a file as one that should reside wholly in the file-oriented storage system (i.e., both the metadata of the file and the data of the file) without storing the data of the file on the object-oriented storage system. If a file does not have at least one of (or optionally a plurality of) these properties, then the processor may migrate the data of the file to the object storage system. Alternatively, or additionally, if a file resides on the object storage system and is found to have at least one of (or optionally a plurality of) these properties, then the processor may migrate the data of the file from the object storage system to the file-oriented storage system.

By fsync() command, or flush command, it may be meant a command to transfer ("flush") all memoryresident data (e.g., data in a buffer or cache) of a file to a permanent storage device (e.g., disc storage). This may mean that all changed information can be retrieved even after the system power is lost. This may include flushing a cache if present. It may also include flushing metadata information associated with the file. Such a command is more efficiently implemented when the data of the file in question is located on the file-oriented storage system.

The processor may be configured to anticipate a use via the file-oriented storage system of a stored file according to an attribute of the file. Examples of relevant attributes include but are not limited to: a size of the file; a file extension; presence of a 'hard link'; simultaneous lock requests on file (e.g., more than one process locking the same file). Small files (e.g., less than 1MB) may be identified as being likely to be more frequently accessed over time and therefore more efficiently used if the data of the file is stored on the file-oriented storage system. Thus, the processor may compare the size of a file (Bytes) to a size threshold (e.g., 1 MB) and to anticipate a use via the file-oriented storage system of the file according to whether the file size is above or below that threshold. Such attributes have been found to indicate a file that is more efficiently managed or used when the data of the file in question is located on the file-oriented storage system.

By lock, in relation to a lock request, it may be meant a mechanism that enforces limits on access to a file or a part of a file, e.g., by allowing only one user or process to modify or delete it. A lock may be designed to enforce a concurrent control policy, e.g., regarding management of concurrent users/processes accessing a file. Generally, locks may be advisory locks, where each user/process cooperates by acquiring the lock before accessing the corresponding data.

By hard link, it may be meant a link that directly associates a name with a given file in an operating system. Unlike a soft link, which changes the pointer when the file is renamed, a hard link still points to the underlying file even if the file name changes, or the file content changes. Hard links are more persistent in connecting a file entry to the same memory space. Hard links may resist file replacement. Both hard links and soft links are pointers, but a hard link is a more persistent pointer. For instance, if a hard link is created to a file named "image1.jpg" and the filename is subsequently changed to "image_01 .jpg", the hard link of the file would continue to work correctly. However, a soft link for the file would not continue to work correctly and would, instead, point to a non-existent file.

File extensions indicate the format of data contained in the file, for example, .txt, .png, .java, .html, doc, etc. The inventors have found that file extensions can be used to efficiently indicate whether the file is more or less likely to be randomly written/read (e.g., database files, with a database file extension) and therefore more efficiently used if the data of the file is stored on the file-oriented storage system. The processor may be configured to refer to a record (e.g., a list) of file extensions of files that previously have been used via the file-oriented storage system and, to anticipate a use of a file via the file-oriented storage system if a file extension of the file corresponds to a recorded file extension. The processor may be configured to record, in the above record, a file extension of files that previously have been (or are being) used via the file-oriented storage system. In this way, the record may be maintained and updated. For example, the processor may be configured to maintain and refer to such a record of file extensions of files that previously have been used via the file-oriented storage system.

For example, the processor may be configured to determine whether a file within the file storage system has been used (or is being used) via the file-oriented storage system and to add the file extension of that file to the record of file extensions if it is not already so listed. The processor may do this as and when a use of the file occurs file via the file-oriented storage, and/or when the data of a file is migrated from the object-oriented storage system to the file-oriented storage system, for example.

The processor may be configured to migrate the data of a file from the file-oriented storage system to the object-oriented storage system under conditions including, but is not limited to, any one or more of the following:
- Files lacking any hard links.
- Files of a size exceeding size threshold (large files e.g., 1 MB or larger in size).
- Files not modified for a period of time exceeding a pre-set time period (e.g., a number (e.g., 10) of days).
- A file extension (e.g., an extension not listed in the aforementioned record of extensions).

Such attributes have been found to indicate a file that is more efficiently managed or used when the data of the file in question is located on the object-oriented storage system. Thus, the processor may compare the size of a file (Bytes) to a size threshold (e.g., 1 MB) and to anticipate that a use of the file via the file-oriented storage system will not occur (or is unlikely) according to whether the file size is above that threshold.

The processor may be configured to migrate the data of a file from the object-oriented storage system to the file-oriented storage system include under conditions including, but is not limited to, any one or more of the following:
- The existence of simultaneous lock requests on file (more than one process locking the same file).
- Multiple writers and/or readers detected (by different processes). Migration may be permitted to be done by a process/user currently holding the 'writer' lock.
- If other users or processes are waiting in pre-open. By 'pre-open' it may be meant a possibility to open a file handle outside of a program (e.g., in the shell) before the starting of the program intending to use the file, and then perform read/write operations on the file via the program from/to that pre-opened file handle.
- If a process that currently holds a 'writer' lock concludes.
- Random-access read operations occurring with sufficient frequency (e.g., as compared to a threshold frequency).
- A file comprises a hard link.
- Detection of flush/fsync() operations (e.g., with sufficient frequency), or a write operation applied to the file that causes a reconstruction of the file before it is closed.
- An operation of renaming a file.

Such commands may be more efficiently implemented when the data of the file in question is located on the file-oriented storage system.

The processor may be configured such that when an application requests to access a file for which the data of the file is stored on the object-oriented storage system, then:
the data of the file is directly retrieved from the object-oriented storage system and passed to the application; and/or,
the metadata of the file is retrieved from the file-oriented storage system (or from the object-oriented storage system) and passed to the application.

The file storage system may further comprising a metadata cache, wherein the processor is configured such that if the data of the file is migrated to the object-oriented storage system, then a corresponding entry is created in the metadata cache that comprises metadata of the file and/or a pointer to the location of an object within the object-oriented storage system containing the data of the file.

The processor may be configured such that when an application requests to access a metadata of file for which the data of the file is stored on the object-oriented storage system, the metadata of the file is retrieved from the metadata cache and passed to the application.

For example, when an application tries to read a file, if it is stored on the object-oriented storage system, then the metadata may be retrieved from file-oriented storage system, and the data may be directly retrieved from object-oriented storage system to the application without first migrating the data to file-oriented storage system. Likewise for a 'write' operation, the data of the file can be directly written/stored on the object-oriented storage system without first writing to file-oriented storage system and then migrating to object-oriented storage system.

The object-oriented storage system may be configured such that one, some or all/each of the objects stored therein comprises a plurality of fields including: a data field configured for storing said data therein; and, a separate object ID attribute field (e.g., filename of other ID) configured for storing identification information associated with the respective object. The information (e.g., an information item, as discussed below) stored within the object ID attribute field of at least one of the plurality of said objects may comprise metadata other than said identification information associated with the at least one object (e.g., the stored information may comprise an information item that functions both as a 'filename' or ID for the object and also contains bytes of information interpretable as metadata other than simply the 'filename' itself). The processor may be configured to access said an/each object stored within the storage medium at least to retrieve information stored within a respective object ID attribute field thereof thereby to retrieve said metadata.

The processor may be configured such that if the data of the file is migrated to the object-oriented storage system, then a corresponding file is created in the file-oriented storage system that comprises a pointer to the location of an object within the object-oriented storage system containing the data of the file.

For example, the file-oriented storage system may hold the file metadata for those files whose data (i.e. the data of the file) is in object-oriented storage. On the file-oriented storage system, a corresponding file may be created for the file metadata that also contains a pointer that refers to (i.e., shadows) the object(s) containing the data of the file within the object-oriented storage system. Each such corresponding file serves multiple purposes:
- It may contain data pointing to the location of the object(s) within the object-oriented storage system that comprise the data of the file to which the metadata in question corresponds.
- Metadata of such a corresponding file in the file-oriented storage system may be configured to be POSIX-compliant and may be set to reflect any existing POSIX metadata of the file. For example, UID/GID, permissions, and mode may be configured accordingly. A benefit if this is that a 'stat' operation on the corresponding file can retrieve POSIX metadata of the original file.
- It may contain data that encodes any other desired metadata not stored in any existing POSIX metadata of the file. For example, other desired metadata may include (without limitation): the file size of the original file (e.g., its metadata and its corresponding actual data).
- POSIX Record Locks (or equivalent such as Open File Descriptor Locks) on the corresponding file may be used to coordinate between different nodes (or mount instances), thus enabling support of POSIX consistency requirements, such as atomic rename etc.
- POSIX Record Locks (or equivalent such as Open File Descriptor Locks) on the corresponding file may be used to detect certain usage patterns enabling the processor to anticipate a use of the file via the file-oriented storage system and that, therefore, it is preferable keep the file in the file-oriented storage system rather than in the object-oriented storage system.

The processor may be configured to apply a prefix encoding (e.g., the 'dot' character: '.') character followed by a symbol (e.g., a Unicode symbol, such as 32-bit unused Unicode symbol) to distinguish, within the file-oriented storage system, between such a corresponding file (i.e., one that shadows an object in object-oriented storage, as noted above) and other files that are not of this type. Thus, for example an original file called 'truman.mp4' may have created for it a corresponding file called '[prefix].truman.mp4'.

The corresponding file may comprise metadata corresponding to the data of the file within the object. Examples of metadata include, without limitation: UID; GID; permissions; file size; POSIX-compliant metadata. The corresponding file may comprise file regions configured to contain information indicating a file lock status of the file. Examples include 'shared' and 'exclusive' locks etc.

The file storage system may be configured to use file locks, such as POSIX Record Locks (or equivalent such as Open File Descriptor Locks) which enable the system to lock regions in a file on the file-oriented storage system as shared or exclusive in a non-blocking manner. These locks may be performed on the real file if present, or the aforesaid corresponding file if not. A shared lock may be such that any number of processes can hold a shared lock on a region of a file, as long as there is no exclusive lock held in any part of the region. An exclusive lock may be acquired by a single process if there are no exclusive or shared locks already acquired in any part of the region.

In order to facilitate the coordination of applications using locks as well, the processor may be configured to reserve a region (e.g., 4KB in size), within an aforesaid corresponding file (e.g., at the start of the file) which is dedicated to one, some or all of the following pre-defined locks:
- An exclusive file lock acquired on a file when the file is being migrated from the file-oriented storage system to the object-oriented storage system.
- A shared lock acquired on file when the file is being opened for reading.
- A shared lock acquired on a corresponding file (e.g., an aforementioned shadowing file) when the object in object-oriented storage that is associated with the corresponding file is being opened for reading.
- An exclusive lock acquired on a file when the object containing the data of the file is being open for writing. If a lock request/attempt by a process fails, then the process may acquire a shared lock permitting access by other writing processes.
- An exclusive lock acquired on a file when the object containing the data of the file is being modified by an operation wherein the operation does not trigger migration of the file to the file-oriented storage system.
- An exclusive lock acquired on a file when the object containing the data of the file is being migrated to from the object-oriented storage system to the file-oriented storage system.
- An exclusive lock acquired on a file when a deletion operation is applied to the file.

The processor may be configured to preserve the reserved lock region in the corresponding file. This may be performed by shifting all application requests to the file-oriented storage system by that reserved area/amount. For example, let the reserved region be 4KB in size at the beginning of a corresponding file, and then consider an application that attempts to lock region [0,200] bytes of the corresponding file, then the processor may be configured to adjust the region to which the original lock request refers to the region [4096,4296] when calling the file-based storage system such that the lock request is, in practice, applied to the region [4096,4296] of the corresponding file. In this way, the processor may ensure that the lock request does not conflict with the reserved lock region. The reserved locks may be advisory locks, whereby applications using them do not need to match the byte regions of the actual data. Instead, applications may merely need to be consistent with other locking requests from other application processes.

The processor may be configured to encode a file lock status of a file by placing a corresponding encoding byte within a file at a reserved byte position (i.e., reserved for that particular lock status encoding) within the reserved lock region of the file. A reserved region within the file may comprise a reserved byte offset, with that byte offset configured to have (i.e., be assigned) a pre-set meaning according to a pre-defined lock. An encoding byte, or encoding bytes where more than one is present, may be according to any one or more of the following configurations:
First reserved byte position (e.g., byte position = 0)
   - Exclusively acquired as part of locks [0-4] record. An exclusive file lock acquired on a file when the file is being migrated from the file-oriented storage system to the object-oriented storage system. This exclusive lock may indicate a File-Oriented => Object-Oriented migration is in progress. The pre-existence of a shared file lock (such as disclosed below) on a file may be configured to prevent such migration.
Second reserved byte position (e.g., byte position = 1)
   - Shared lock. Acquired on file when file is being opened for reading. Acquired on a corresponding (shadowing) file when the object is being opened for reading. Locked exclusively when file is being migrated to the object-oriented storage system. This file lock may be configured for all processes to signal that a process has the file open for read (or write). This file lock may be configured such that an exclusive lock attempt/request can be used by a process/node to test whether or not there are any nodes using this file (e.g., when requesting the exclusive lock associated with the seventh reserved byte position disclosed below, allowing safe deletion).
Third reserved byte position (e.g., byte position = 2)
   - Shared lock. Acquired on file when file is being opened for reading. Acquired on a corresponding file (e.g., an aforesaid shadowing file) when the object is being opened for reading. Locked exclusively when file is being migrated to the object-oriented storage system. This shared lock may be used for other processes that want to open a file for write while an exclusive lock associated with the fourth reserved byte position disclosed below, (FirstWriter) is held.
Fourth reserved byte position (e.g., byte position = 3)
   - An exclusive lock acquired on a file when the object containing the data of the file is being open for writing. If a lock request/attempt by a process fails, then the process may acquire a shared lock permitting access by other writing processes. This exclusive locking may be configured such that whichever process/node acquires it on a file (e.g., the first to open the file for a write operation thereto) on the object-oriented storage system, is granted capability of also migrating the file from the object-oriented storage system to the file-oriented storage system.
Fifth reserved byte position (e.g., byte position = 4)
   - An exclusive lock acquired on a file when the object containing the data of the file is being modified by an operation wherein the operation does not trigger migration of the file to the file-oriented storage system. Prevents races during migration, rename, delete, write. This lock maybe configured such that a file is exclusively locked by a process/node to mark that an atomic operation is in progress.
Sixth reserved byte position (e.g., byte position = 5)
   - An exclusive lock acquired on a file when the object containing the data of the file is being migrated to from the object-oriented storage system to the file-oriented storage system. Also acquired before migration is Check (4). The pre-existence of a shared file lock (such as disclosed herein) on a file may be configured to prevent such migration.
Seventh reserved byte position (e.g., byte position = 6)
   - Exclusive lock acquired when a file (e.g., an object and/or its corresponding file (e.g., an aforesaid shadowing file) is pending deletion. This may notify other users, processes or nodes to clean-up after close (e.g., clean-up the cloud if there are no other users of the cloud file).

For example, a process may reserve an exclusive lock on byte 0 to indicate that a node is trying to migrate the associated file. Consequently, another node can check whether or not a migration is happening by attempting to acquire a shared lock on byte 0, and observing that the attempt fails. Similarly, a process may attempt to open a file for writing, and may acquire a shared lock on reserved byte 2, thus blocking migration attempts until there are no processes trying to write to the file.

Altematively, or in addition, the file storage system may comprise a metadata cache, wherein the processor is configured such that if the data of the file is migrated to the object-oriented storage system, then a corresponding file (e.g., an aforesaid shadowing file) is created in the metadata cache that comprises metadata of the file and a pointer to the location of an object within the object-oriented storage system containing the data of the file. The file storage system may be configured to store metadata of a file in the object-oriented storage system when the data of the file is also stored on the object-oriented storage system (e.g., such that both the data of the file and its associated metadata reside on the object-oriented storage system). It is to be noted that preferably the metadata cache is not a primary store of the file-oriented storage system or of the object-oriented storage system.

A local metadata database (DB) cache may be provided for this purpose, e.g., as part of a distributed (e.g., multi-node) metadata DB cache. The file storage system may comprise a Distributed Hash Table configured for lease management of write control for each directory (or directory segments in cases where a large directory is broken into consistent separate segments). Lease management control may be on a First-Come-First-Served basis, with any subsequent read/write queries then being redirected to the node that has the current lease. The file storage system may be configured to allow multiple nodes to have a read-only cache of a directory (or directory segment) unless invalidated by a write control lease

When querying files / directories such as checking for the existence of files, or listing a directory's contents, the processor may be configured to query both the file-oriented storage system and the object-oriented storage system and combine the query results together. These query results may be held in the metadata cache for future reference.

The metadata cache may primarily hold the metadata also stored in the object-oriented storage system, and also hold metadata related to whether or not a file is being migrated to/from the file-oriented storage system. The metadata cache may be configured to handle invalidation events from another node such that queries may be maintained up to date and may be atomic. The metadata cache may be configured such that that both file-oriented storage system and the object-oriented storage system are only being modified via the file storage system of the present invention (e.g., via the processor).

By atomic, it may be meant an atomic transaction (e.g., as in a database system) that is an indivisible and irreducible series of operations such that either all occur, or nothing occurs. Atomicity may prevent updates to the storage system (e.g., database) occurring only partially. As a consequence, the transaction cannot be observed to be in progress by another client: at one moment in time, is observed to have not yet happened, and at the next moment it is observed to already have occurred in full/wholly.

The processor may be configured such that when an application requests to read a file stored on the storage system of the invention, then if the file is stored on the object-oriented storage system (partition) the metadata is retrieved from file-oriented storage system and the data of the file is directly retrieved from the object-oriented storage system (partition) and passed to the application. By directly retrieving the data of the file, it is meant that the data is retrieved from the object-oriented storage system without first migrating the data of the file to the file-oriented storage system.

The processor may be configured such that when an application requests to write data to a file stored on the storage system of the invention, the data of the file is directly written/stored on the object-oriented storage system (partition). By directly writing/storing data on the object-oriented storage system, it is meant that this writing/storing may be performed without first writing/storing the data to the file-oriented storage system (partition) and then migrating it to the object-oriented storage system.

In a second aspect, the invention may provide a computer-implemented method for storing files comprising data and associated metadata, the method comprising:
providing a file-oriented storage system comprising a storage medium and storing metadata of said files within a hierarchical file structure therein;
providing an object-oriented storage system comprising a storage medium configured to store said data of said files as objects therein;
anticipating a use via the file-oriented storage system of a stored file; and,
migrating to the object-oriented storage system the data of the file if such use is not anticipated thereby storing the data of the file within the object-oriented storage system instead of within the file-oriented storage system; or,
migrating to the file-oriented storage system the data of the file if such use is anticipated thereby storing the data of the file within the file-oriented storage system instead of within the object-oriented storage system.

The method may be such that the anticipating comprises anticipating a use via the file-oriented storage system of a stored file according to a file access pattern of the file.

The anticipating may comprise anticipating a use via the file-oriented storage system of a stored file according to an attribute of the file.

The method may be such that when an application requests to access a file for which the data of the file is stored on the object-oriented storage system, the method comprises retrieving the metadata of the file from file-oriented storage system and passing the retrieved metadata to the application, and retrieving the data of the file directly from the object-oriented storage system and passing the retrieved data of the file to the application.

The method may comprise referring to a record of file extensions of files that previously have been used via the file-oriented storage system. The anticipating may comprise anticipating a use of a file via the file-oriented storage system if a file extension of the file corresponds to a recorded file extension. The method may include recording, in the above record, a file extension of files that previously have been (or are being) used via the file-oriented storage system.

In the method, optionally or desirably, if the data of the file is migrated to the object-oriented storage system, then the method may include creating a corresponding file in the file-oriented storage system that comprises a pointer to the location of an object within the object-oriented storage system containing the data of the file.

The corresponding file may comprise metadata corresponding to the data of the file within the object.

The corresponding file may comprise file regions configured to contain information indicating a file lock status of the file.

The method may comprise:
providing a metadata cache;
wherein, if the data of the file is migrated to the object-oriented storage system, then creating a corresponding file in the metadata cache that comprises metadata of the file and a pointer to the location of an object within the object-oriented storage system containing the data of the file.

The method may comprise, when an application requests to access a file for which the data of the file is stored on the object-oriented storage system, then:
the data of the file is directly retrieved from the object-oriented storage system and passed to the application; and/or,
the metadata of the file is retrieved from the file-oriented storage system (or from the object-oriented storage system) and passed to the application.

The method may comprise providing a metadata cache, wherein if the data of the file is migrated to the object-oriented storage system, then a corresponding entry is created in the metadata cache that comprises metadata of the file and/or a pointer to the location of an object within the object-oriented storage system containing the data of the file.

The method may comprise, when an application requests to access a metadata of file for which the data of the file is stored on the object-oriented storage system, the metadata of the file is retrieved from the metadata cache and passed to the application.

In the method, preferably or optionally, at least one, some or all/each of the objects comprises a plurality of fields including: a data field configured for storing data therein; and, a separate object ID attribute field configured for storing identification information associated with the object. The information stored within the object ID attribute field of at least one of the plurality of said objects preferably comprises metadata other than said identification information associated with the at least one object. The method may comprise storing the plurality of objects on a storage medium. The method may comprise, by the processor, accessing a said object at least to retrieve information stored within a respective object ID attribute field thereof, thereby to retrieve said metadata.

In a third aspect, the invention may provide a data processing apparatus comprising a processor configured to perform the method described above.

In a fourth aspect, the invention may provide a computer readable medium comprising instructions stored thereon which, when executed by a computer, cause the computer to perform steps of the method according to the method described above.

In a fifth aspect, the invention may provide a computer program, or a computer program product, comprising instructions which, when the program is executed by a computer, cause the computer to carry out the method described above.

In a sixth aspect, the invention may provide a data carrier signal carrying the computer program, or computer program product, described above.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1A** schematically illustrates an object associated with an object-oriented storage system.
**Figure 1B** schematically illustrates an object associated with an object-oriented storage system according to an embodiment of the invention.
**Figure 2** schematically illustrates an object-oriented storage system.
**Figure 3** schematically illustrates a hybrid storage system comprising an object-oriented storage part and a file-oriented storage part.
**Figure 4** schematically illustrates a hybrid storage system comprising an object-oriented storage part and a file-oriented storage part.
**Figure 5** schematically illustrates steps in a method for hybrid storage file comprising an object-oriented storage part and a file-oriented storage part.
**Figures 6 to 15** schematically illustrate a respective Transition Diagram.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

Figure 1 schematically illustrates an object 1 configured for storge and retrieval in an object-based data storage system. The object comprises a plurality of fields. These fields include a data field 3 configured for storing data therein. The data may be in the form of a file such as an image file, a video file or a text file or the like. The fields include a separate object ID attribute field 22 configured for storing identification information associated with the object, such as an object name or a unique identifier (UID). Additional fields may include separate attribute fields 2 configured to store metadata, such as metadata generated by the object-based storage system for recording attributes of the data stored within the data field 3.

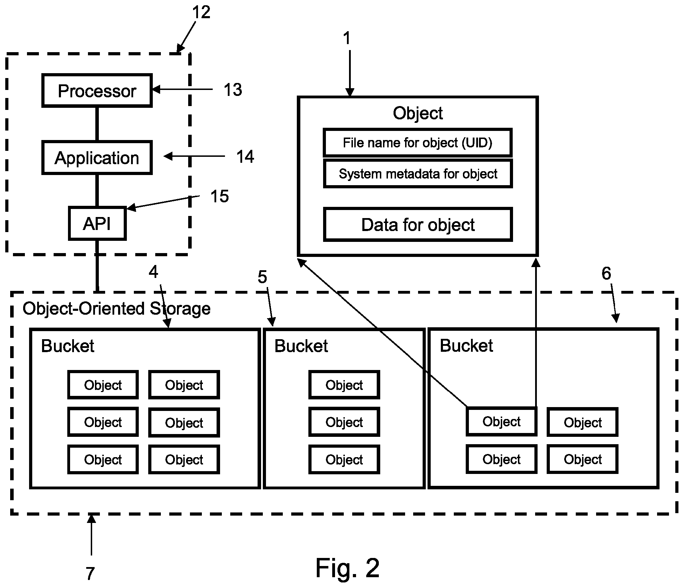

Multiple objects, each having the form of the object 1 illustrated in Figure 1, may be stored in an object-based storage system in a respective one of multiple 'buckets' (4, 5, 6) within the overall storage space 7, such as schematically illustrated in Figure 2. As is well-known in the art, a bucket is a logical container, or compartment, for storing objects. Users or systems (13, 14, 15) may create buckets as needed within a storage space. A bucket is typically associated with certain pre-set policies that determine what actions a user can perform on a bucket and on all the objects in the bucket.

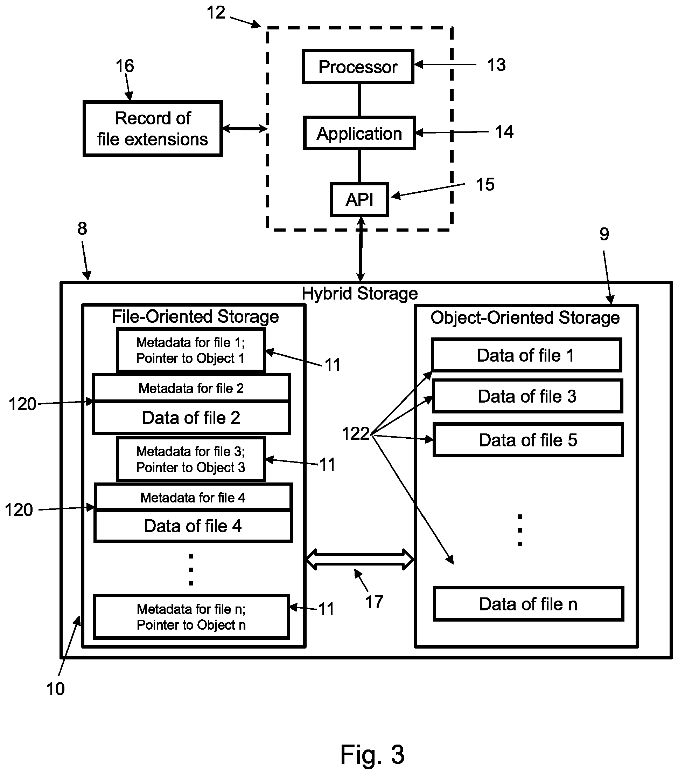

Figure 3 schematically shows an example of an embodiment of the invention comprising a file storage system implemented by a computer for storing files comprising data and associated metadata. The file storage system includes a hybrid file storage unit 8 comprising a file-oriented storage system 10 having a storage medium configured to store metadata of stored files as metadata files 11 within a hierarchical file structure, and an object-oriented storage system 9 having a storage medium configured to store data of the files as objects 122 therein. A data processing apparatus (13, 14, 15) comprises a processor 13 configured to perform the processes and functions described below. A computer readable medium (not shown) may comprise instructions stored thereon which, when executed by the data processing apparatus, cause the data processing apparatus to perform these processes and functions, as described below. Accessing of the hybrid storage unit 8 may be performed by the processor 13 via a software application 14 and an application programming interface (API) 15, as appropriate.

A file may be stored in the file-oriented storage system 10 of the hybrid storage system as files 120 comprising data of the file and associated metadata for the file, or may be partitioned such that the metadata for the file is stored as a metadata file 11 on the file-oriented storage system 10, and separately the data of the file is stored on the object-oriented storage system 9 in an object 122.

The processing apparatus is configured to anticipate a use of a stored file via the file-oriented storage system 10 and to migrate 17 to the object-oriented storage system the data of the file if such use is not anticipated. As a result, if it is not anticipated, predicted or expected that a file 120 will be used by a user or an application or process via the file-oriented storage system 10, then the data of the file is migrated from the file-oriented storage system for storing within the object-oriented storage system as an object 122 therein, instead of within the file-oriented storage system.

Altematively, or in addition, if it is anticipated, predicted or expected that a file having data within an object 122 of the object-oriented storage system will be used by a user or an application or process via the file-oriented storage system 10, then the processing apparatus may migrate to the file-oriented storage system the data of the file (within an object 122) if such use is anticipated thereby storing the data of the file within the file-oriented storage system 10 instead of within the object-oriented storage system 9.

File system client software (14, 15) may interact with the hybrid storage system 8 and may abstract the file-based storage system 10 and the object-based storage system 9 to present an object-based file system to users and applications. An interface may include commands to create and delete file-oriented or object-oriented files/objects, write bytes and read bytes to and from individual files/objects, and to set and get attributes on/from files/objects.

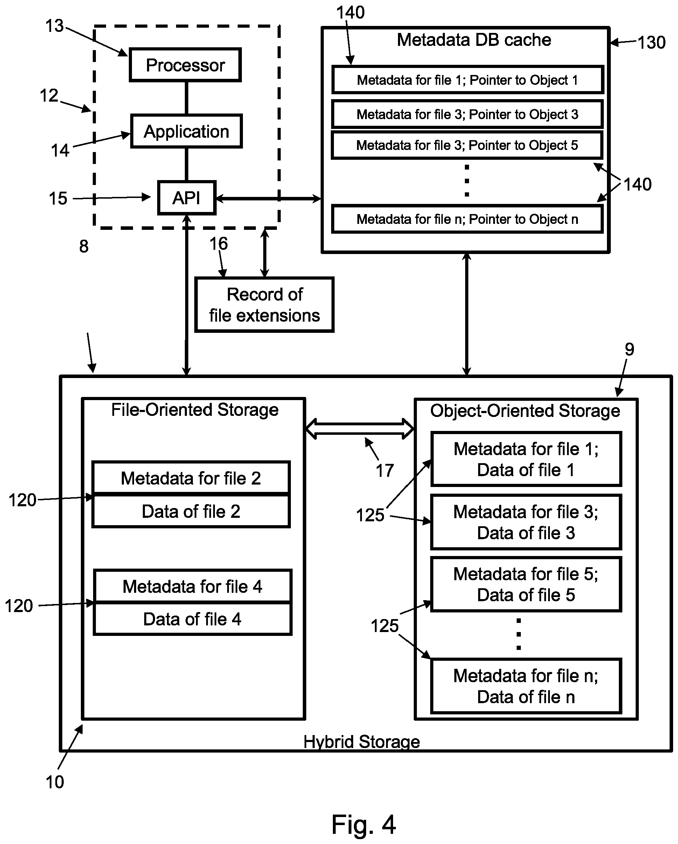

Thus, in embodiments of the invention illustrated in Figure 3 (and Figure 4), the invention provides an approach whereby a hybrid file storage system 8 allows direct interfacing of a workload (e.g., a POSIX workload) to both traditional file-oriented storage 10 and to object-oriented storage 9. The hybrid file storage system 8 partitions the file storage into a file-oriented part 10 and an object-oriented part 9 and assigns the data of a file to either one of these partitions, as appropriate to an anticipated use of the data of the file. Each file in storage may be moved from one partition to the other as appropriate based on an anticipated use of the data of the file.

Referring to Figure 3, the hybrid storage system has stored upon it both data and associated metadata of n (integer number) separate files: 'file 1' to 'file n'. Separate metadata files comprising metadata respectively for: 'file 1'; 'file 3'; 'file 5'...'file n' are stored on the file-oriented storage system. In addition, compete files, comprising both the actual data of the file and the metadata associated with it, are also stored upon the file-oriented storage system for: 'file 2' and 'file 4'. However, the data of 'file 1', 'file 3', 'file 5'...'file n', alone is stored in separate respective objects 122 upon the object-oriented storage system. The data of 'file 2 and 'file 4' has been migrated (17) from the object-oriented storage system and stored on the file-oriented storage system 10 as a result of the processing apparatus 12 anticipating a use of 'file 2' and of 'file 4' via the file-oriented storage system.

In this way, the invention may place the data of the file in a file-oriented storage system when it is considered probable, expected or predicted that a use of a stored file (e.g., use of its data) will arise via the file-oriented storage system thereby permitting more efficient usage of the data of the file, or altematively the invention may place the data of the file in an object-oriented storage system when a use of a stored file via the file-oriented storage system is considered to be not probable, or not expected, or not likely(unlikely)/predicted thereby permitting more efficient storage of the data of the file by the object-oriented storage system.

The processing apparatus may be configured to perform migration 17 of the data of a file to the file-oriented storage system in response to an aforementioned anticipation of use without also being configured to perform migration 17 of the data of a file to the object-oriented storage system in response to an anticipation of non-use in that way (i.e., such use not anticipated). The processor may be configured to perform migration 17 of the data of a file to the object-oriented storage system in response to an anticipation of non-use by the file-oriented storage system (i.e., such use not anticipated), without also being configured to perform migration 17 of the data of a file to the file-oriented storage system in response to an anticipation of such use. However, in preferred embodiments, the processor may be configured to perform migration 17 of the data of a file to the file-oriented storage system in response to an aforementioned anticipation of use, and concurrently also be configured to perform migration 17 of the data of a file to the object-oriented storage system in response to an anticipation of non-use in that way (i.e., such use not anticipated).

Migration 17 of the data of a file to the file-oriented storage system may comprise migrating the data 122 of the file that is currently stored in the object-oriented storage system 9. In other words, migration may be from the object-oriented storage system into the file-oriented storage system. Migration 17 of the data of a file to the object-oriented storage system 9 may comprise migrating the data of the file that is currently stored in the file-oriented storage system 10. In other words, migration 17 may be from the file-oriented storage system 10 into the object-oriented storage system 9. This letter migration has occurred for the data respectively of: 'file 1'; 'file 3'; 'file 5'...'file n'. As a result, and because no use of the files in question via the file-oriented storage system is anticipated for them, only metadata files reside on the file-oriented storage system 10 for these files, and only objects (containing data of the files) reside in the object-oriented storage system for these files.

The processing apparatus 12 is configured to anticipate a use via the file-oriented storage system of a stored file (i.e., any of 'file 1' to 'file n') according to a file access pattern of the file. Examples of relevant access patterns include but are not limited to: a frequency of use of a file (e.g., sufficiently frequent); a frequency of file access requests (e.g., sufficiently frequent); a random access request (read or write) to a file (e.g., apart from during creation of the file); simultaneous multiple lock requests to the file (e.g., more than one process locking the same file); flush or fsync() commands (e.g., sufficiently frequent) applied to the file; a write operation applied to the file that causes a reconstruction of the file before it is closed. Such commands may be more efficiently implemented when the data of the file in question is located on the file-oriented storage system. The processing apparatus is configured to monitor or detect the access patterns of files (i.e., any of 'file 1' to 'file n') within the file storage system in order to detect a relevant such access pattern and to anticipate a use via the file-oriented storage system of a stored file accordingly. In this way, the processing apparatus is configured to identify certain operations as identifying a file as one that should reside wholly in the file-oriented storage system 10 (i.e., both the metadata of the file and the data of the file) without storing the data of the file on the object-oriented storage system 9. If a file does not have at least one of these properties, then the processing apparatus migrates 17 the data of the file to the object storage system 9 to reside there as an object 122. Altematively, or additionally, if a file resides on the object storage system 9 and is found to have at least one of these properties, then the processing apparatus migrates 17 the data of the file from the object-oriented storage system 9 to the file-oriented storage system 10.

The processing apparatus 12 is configured to anticipate a use, via the file-oriented storage system 10, of a stored file according to an attribute of the file. Examples of relevant attributes include but are not limited to: a size of the file; a file extension; presence of a 'hard link'; simultaneous lock requests on file (e.g., more than one process locking the same file). Small files (e.g., less than 1MB) may be identified as being likely to be more frequently accessed overtime and therefore more efficiently used if the data of the file is stored on the file-oriented storage system. Thus, the processing apparatus compares the size of a file (Bytes) to a size threshold (e.g., 1MB) and anticipates a use, via the file-oriented storage system 10, of the file according to whether the file size is above or below that threshold.

The processing apparatus is configured to refer to a record 16 (e.g., a list) of file extensions of files that previously have been used via the file-oriented storage system 10 and to anticipate a use of a file via the file-oriented storage system if a file extension of the file corresponds to a file extension recorded in the record 16. The record may contain a pre-set list of file extensions of files that previously have been (or are being) used via the file-oriented storage system 10. In preferred embodiments, the processing apparatus is configured to add to the record 16 a file extension newly found to be used via the file-oriented storage system 10 if that file extension is not already on the recoded list of file extensions 16. The processing apparatus may do this as and when a use of the file occurs file via the file-oriented storage, and/or when the data of a file is migrated from the object-oriented storage system to the file-oriented storage system, for example. In this way, the record 16 may be maintained and updated.

The processing apparatus 12 is configured such that if the data of a file (i.e., any of 'file 1' to 'file n') is migrated 17 to the object-oriented storage system 9, to reside there as an object 122, then the corresponding metadata file 11 is created in the file-oriented storage system so as to contain a pointer to the location of an object 122 within the object-oriented storage system 9 containing the data of the file. For example, the file-oriented storage system 10 may hold the file metadata 11 for those files (i.e., any of 'file 1', 'file 3', 'file 5' to 'file n') whose data (i.e. the data of the file) is in object-oriented storage. On the file-oriented storage system 10, a corresponding file 11 is created for the respective file metadata that also contains a pointer that refers to (i.e., shadows) the object(s) containing the data of the file within the object-oriented storage system. Examples of such metadata include, without limitation: UID; GID; permissions; file size; POSIX-compliant metadata.

The processing apparatus is configured to apply a prefix encoding character followed by a symbol to distinguish, within the file-oriented storage system, between such a corresponding file (i.e., one that shadows an object in object-oriented storage, as noted above) and other files that are not of this type. Thus, for example an original file called 'truman.mp4' may have created for it a corresponding file called '[prefix].truman.mp4'.

The corresponding file 11 may be created to comprise file regions configured to contain information indicating a file lock status of the file. Examples include 'shared' and 'exclusive' locks etc. To achieve this, the processing apparatus is configured to reserve a region (e.g., X kilobytes in size), within a corresponding file 11 at the start of the file which is dedicated to one or more pre-defined file locks. Examples of file locks include, but are not limited to:
- An exclusive file lock acquired on a file when the file is being migrated from the file-oriented storage system to the object-oriented storage system.
- A shared lock acquired on file when the file is being opened for reading.
- A shared lock acquired on a corresponding file when the object in object-oriented storage that is associated with the corresponding file is being opened for writing while the exclusive file lock is being held by another process.
- An exclusive lock acquired on a file when the object containing the data of the file is being open for writing. If a lock request/attempt by a process fails, then the process may acquire a shared lock permitting access by other writing processes.
- An exclusive lock acquired on a file when the object containing the data of the file is being modified by an operation wherein the operation does not trigger migration of the file to the file-oriented storage system.
- An exclusive lock acquired on a file when the object containing the data of the file is being migrated to from the object-oriented storage system to the file-oriented storage system.
- An exclusive lock acquired on a file when a deletion operation is applied to the file.

The processing apparatus preserves the reserved file lock region in the corresponding file 11. This is performed by shifting all application requests to the file-oriented storage system 10 by that reserved area/amount (i.e., X kilobytes).

In another embodiment, as illustrated in Figure 4, the file storage system comprises a local metadata database (DB) cache 130. The processing apparatus is configured such that if the data of the file is migrated 17 to the object-oriented storage system 9, then a corresponding entry 140 is created in the metadata cache that comprises metadata of the file and a pointer to the location of an object 125 within the object-oriented storage system 9 containing the data of the file. The file storage system is configured to store metadata of a file in the object-oriented storage system 9 when the data of the file is also stored on the object-oriented storage system 9. In this regard, the metadata for the file is encoded in the filename of certain objects (and not necessarily in one object per file) as shown in Figure 1B discussed below. The metadata database (DB) cache 130 is not a primary store of the hybrid storage system. The local metadata database (DB) cache is a distributed (e.g., multi-node) metadata DB cache. The file storage system comprises a Distributed Hash Table (not shown) configured for lease management of write control for each directory such that lease management control is provided on a First-Come-First-Served basis, with any subsequent read/write queries then being redirected to the node that has the current lease.

When querying files / directories such as checking for the existence of files, or listing a directory's contents, the processing apparatus is configured to query the metadata cache 130 and if the query is not (e.g., cannot be answered due to the relevant files not existing there) answered by the metadata cache, then the processing apparatus is configured to consult either one of, or both of, the file-oriented storage system 10 and the object-oriented storage system 9 and combine the query results together. These query results may then be held in the metadata cache 130 for future reference.

The metadata cache 130 primarily holds the metadata also stored in the object-oriented storage system 9, and also hold metadata related to whether or not a file is being migrated to/from the file-oriented storage system 10. The metadata cache 130 is configured such that that both file-oriented storage system 10 and the object-oriented storage system 9 are only able to be modified via the hybrid storage system of the present invention.

In this way, as embodied in examples described above, the file storage system, in preferred embodiments, implements a method (e.g., by the processing apparatus 12) comprising the following steps:
- STEP 1:: Anticipate a use, via the file-oriented storage system, of a stored file.
- STEP 2:: Migrate the data of the file to the object-oriented storage system if such use is not anticipated thereby storing the data of the file within the object-oriented storage system instead of within the file-oriented storage system.
- STEP 3:: Migrate the data of the file to the file-oriented storage system if such use is anticipated thereby storing the data of the file within the file-oriented storage system instead of within the object-oriented storage system.

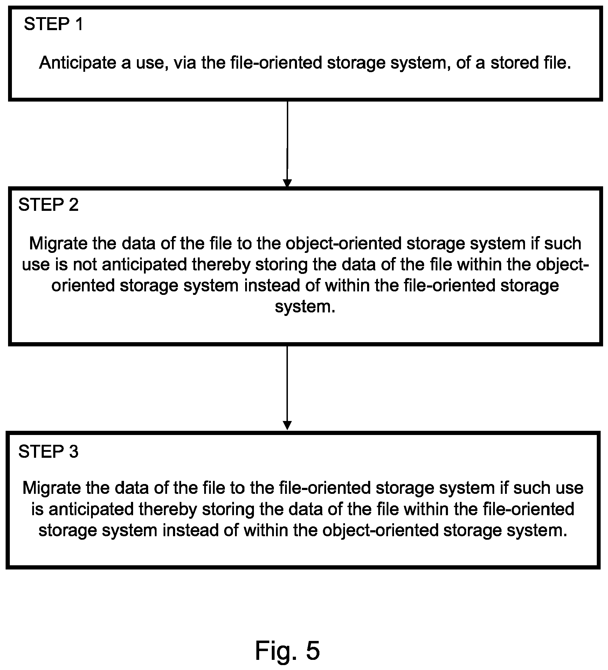

In this way, the method may generate new objects for storage in the object-based data storage medium, as shown in Figure 5 which schematically illustrates the above steps in a method for hybrid storage file comprising an object-oriented storage part and a file-oriented storage part discussed above. However, it is to be understood that the processing apparatus 12 may be configured such that when an application initiates a process to create a new file (e.g., an entirely new file), the processor may determine that the file should be written directly to the object-oriented storage system rather than being first written to the file-oriented storage system and subsequently migrated to the object-oriented storage system. The processor may be configured to determine this by the process of anticipating described above, such that if a use of the file to be created by the initiated process, is not anticipated to be via the file-oriented storage system then it is written directly to the object-oriented storage system.

For example, when an application tries to read a file, if it is stored on the object-oriented storage system, then the metadata may be retrieved from file-oriented storage system, and the data may be directly retrieved from object-oriented storage system to the application without first migrating the data to file-oriented storage system. Likewise for a 'write' operation, the data of the file can be directly written/stored on the object-oriented storage system without first writing to file-oriented storage system and then migrating to object-oriented storage system.

Thus, the processor is configured such that when an application requests to access a file for which the data of the file is stored on the object-oriented storage system, then the data of the file is directly retrieved from the object-oriented storage system and passed to the application; and/or, the metadata of the file is retrieved from the file-oriented storage system (or from the object-oriented storage system) and passed to the application.

In embodiments of the invention, illustrated in Figure 4 and Figure 1B, the invention each provide hybrid storage system 8 whereby metadata other than the filename of an object is stored within the filename attribute field of an object(s) in the object-oriented storage system 9. This means that stored metadata associated with stored objects 125 can be retrieved from stored objects directly simply by implementing a known operation (e.g., a LIST operation) of the object-based storage system for retrieving the filenames for the objects when generating a list of stored objects 125. This is also particularly useful as it provides compatibility with file-based storage systems (e.g., POSIX-compliant systems) in which an equivalent directory 'read' operation typically requires this metadata to be provided.

In particular, referring to Figure 1B, there is schematically shown an object 125 configured for storage in an object-based data storage system 9. This object includes a data field 180 configured for storing data 210, and an attributes field region 170 containing attributes fields configured for storing attributes of the object 125 including attributes of the data 210 stored within the data field 180. The attributes field comprises multiple attribute fields within it, including a filename field 190 configured for storing a filename for the object, and one or more other attributes fields 200 each configured for storing other attributes 240 of the object. Notably, however, the filename field 190 of the object 125 contains an information item 230 comprising metadata associated with the same object (e.g., associated with the data 210 specifically and/or associated with the object 125 as a whole). This information item 230 comprising metadata performs the role of a filename for the object. In other words, the filename field may contain no additional filename information and may simply contain the information item comprising metadata 230 alone. Even though the filename field 190 contains only the information item 230, the filename field 190 continues to be recognised as a filename field by the object-based data storage system in which the object 125 resides. Consequently, the stored metadata 230 within the filename field 190 will be retrieved from the object 160 directly by implementing a known operation (e.g., a LIST operation) of the object-based storage system for retrieving the filename for the object 160 when generating a list of stored objects. In this way, the metadata contained within the filename attribute field of an object may comprise metadata associated with only that one object.

File attributes are pieces of information associated with a file or directory that includes additional data about the file itself or its contents. For example, a byte may store an attribute of a file. Each specific attribute may be assigned to a specific bit of a byte. To enable a certain attribute, the system may assign e.g., a bit value of 1 ('one') to the corresponding bit, which represents the 'On' state of that attribute. An attribute bit may correspond to one or more of the following attributes: executable; symbolic link; directory bit; setuid bit; setgid bit. For a given file/directory, other examples of associated attributes are user identifier (UID), group identifier (GID), access control list (ACL), and 'mode', or 'creation time'.

If a metadata cache is used (see Figure 4) then if the data of the file is migrated to the object-oriented storage system, then a corresponding entry is created in the metadata cache that comprises metadata of the file and/or a pointer to the location of an object within the object-oriented storage system containing the data of the file. When an application requests to access a metadata of file for which the data of the file is stored on the object-oriented storage system, the metadata of the file is retrieved from the metadata cache and passed to the application.

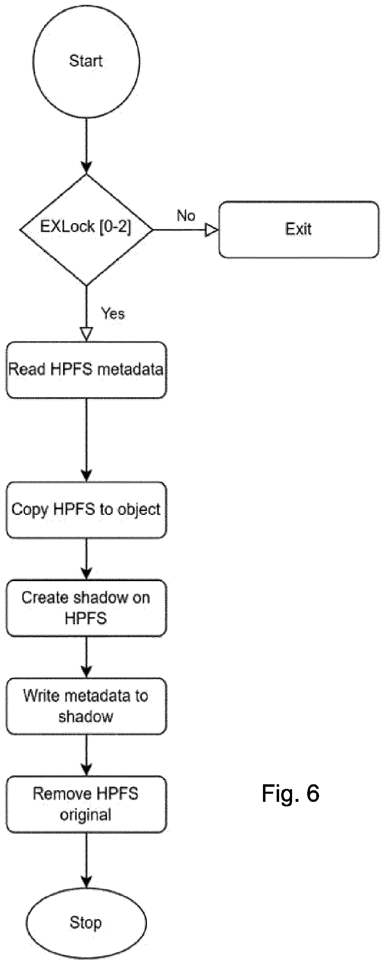

Figures 6 to 15 schematically illustrate a respective Transition Diagram for implementation by the processing apparatus 12 when implementing the following record locks usage.

### Record locks usage

The following six integers [0 to 6] represent the encoding of a file lock status of the file configured as a byte position in the reserved region of the file:
Reserved byte position = 0
   - Exclusively acquired as part of locks [0-4] record. An exclusive file lock acquired on a file when the file is being migrated from the file-oriented storage system to the object-oriented storage system.
Reserved byte position = 1
   - Shared lock. Acquired on file when file is being opened for reading. Acquired on a corresponding (shadowing) file when the object is being opened for reading. Locked exclusively when file is being migrated to the object-oriented storage system.
Reserved byte position = 2
   - Shared lock. Acquired on file when file is being opened for reading. Acquired on a corresponding (shadowing) file when the object is being opened for reading. Locked exclusively when file is being migrated to the object-oriented storage system.
Reserved byte position = 3
   - An exclusive lock acquired on a file when the object containing the data of the file is being open for writing. If a lock request/attempt by a process fails, then the process may acquire a shared lock permitting access by other writing processes.
Reserved byte position = 4
   - An exclusive lock acquired on a file when the object containing the data of the file is being modified by an operation wherein the operation does not trigger migration of the file to the file-oriented storage system. Prevents races during migration, rename, delete, write.
Reserved byte position = 5
   - An exclusive lock acquired on a file when the object containing the data of the file is being migrated to from the object-oriented storage system to the file-oriented storage system. Also acquired before migration is Check (4).
Reserved byte position = 6
   - Exclusive lock acquired when the object is being deleted to notify other users to cleanup the object after close. An exclusive lock acquired on a file when a deletion operation is applied to the file.

Figure 6 illustrates a Transition Diagram of steps implemented by the processing apparatus 12 for migrating 17 a file from the file-oriented storage system to the object-oriented storage system. After starting the process, an attempt is made to acquire an exclusive lock at reserved byte positions 0 to 4. If the locking operation fails the process exits. Otherwise, the process proceeds to read the metadata 11 present within the file-oriented storage system 10 (referred to as "HPFS" in figure 6). The process proceeds to copying the data of the file within the file-oriented storage system into an object within the object-oriented storage system 9. A corresponding (i.e., shadowing) file is then created within the file-oriented storage system. The previously read metadata is then copied to the shadowing file and the original file within the file-oriented storage system is deleted. The process then ends.

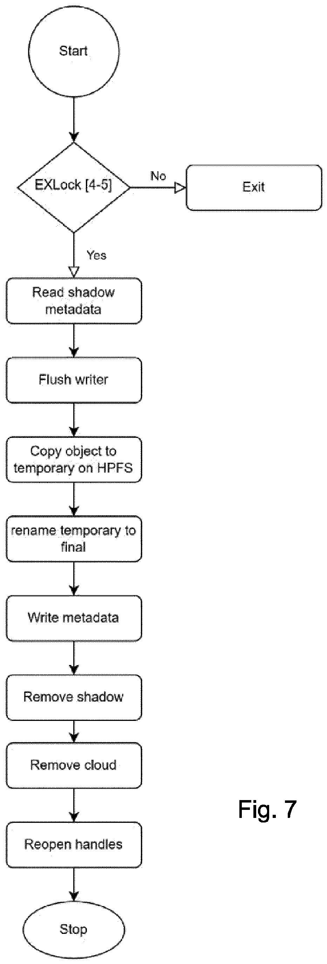

Figure 7 illustrates a Transition Diagram of steps implemented by the processing apparatus 12 for migrating 17 a file to the file-oriented storage system from the object-oriented storage system. After starting the process, an attempt is made to acquire an exclusive lock at reserved byte positions 4 to 5. If the locking operation fails the process exits. Otherwise, the process proceeds to read the metadata present within a corresponding (i.e., shadowing) file associated with data of a file in an object within the object-oriented storage system. The writer of the processing apparatus is then flushed, and subsequently a copy of the aforementioned object is made in temporary storage on the file-oriented storage system (referred to as "HPFS" in figure 7), and renamed as the final copy. Metadata of the shadowing file (previously read) is then written to the final copy file containing the data of the file copied from the associated object. The shadowing file is then removed from the file-oriented storage. Handles that were previously open are reopened to refer to the file on the file-oriented storage system. The cloud data is then deleted and the process stops.

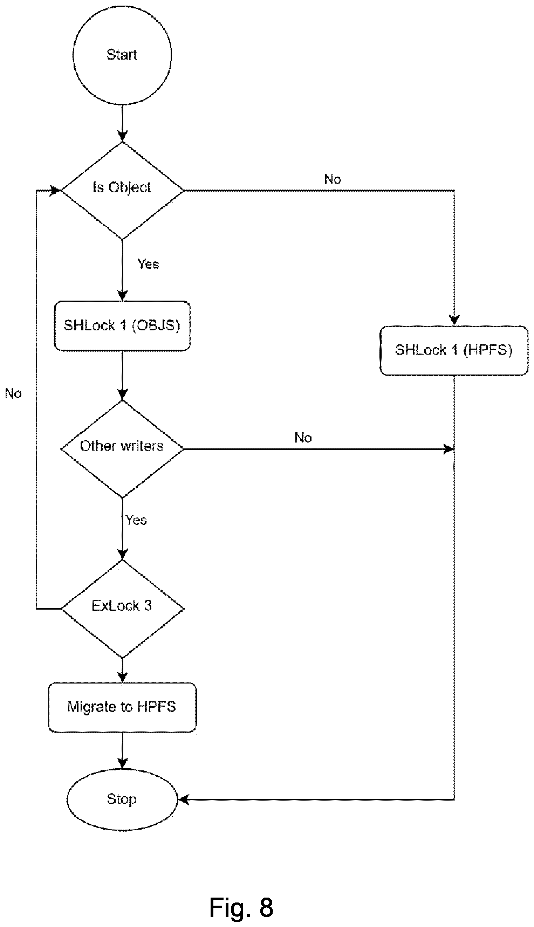

Figure 8 illustrates a Transition Diagram of steps implemented by the processing apparatus 12 for opening a file for reading. After starting the process, a query is made as to whether the file to be read is an object (i.e., from object-oriented storage). If it is not, then reserved byte position 1 is used to apply a shared lock to the file within the file-oriented storage system, and the process then stops. Otherwise, the same file lock (reserved byte position 1) is applied to the file within the object-oriented storage system (referred to as "OBJS" in figure 8). Next, it is determined whether or not other writing processes exist in relation to the file. If none exist, then the process stops. Otherwise, the process proceeds to attempt to apply an exclusive lock corresponding to reserved byte position 3 on the file. If this attempt fails, then the process returns to the start, but if it is successful then the process proceeds by migrating the content of the object from the object-oriented storage system 9 to the file-oriented storage system 10.

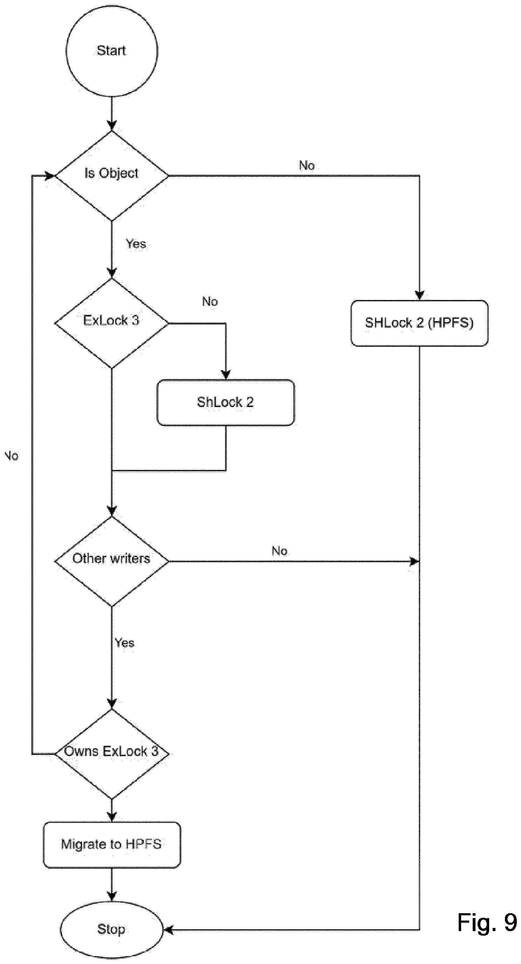

Figure 9 illustrates a Transition Diagram implemented by the processing apparatus 12 for opening a file for writing. After starting the process, a query is made as to whether the file to be opened is an object (i.e., from object-oriented storage). If it is not, then reserved byte position 2 is used to apply a shared lock to the file within the file-oriented storage system (referred to as "HPFS" in figure 9), and the process then stops. Otherwise, the process proceeds to attempt to apply an exclusive lock corresponding to reserved byte position 3 on the file. If this attempt fails, then the process proceeds to use the reserved byte position 2 to apply a shared lock to the file within the object-oriented storage system. If the attempt is successful, then it is determined whether or not other writing processes exist in relation to the file. If none exist, then the process stops. Otherwise, the process proceeds to determine whether an exclusive lock corresponding to reserved byte position 3 on the file is owned by this process. If this ownership is not so, then the process returns to the start, but if it is so, then the process proceeds by migrating the content of the object from the object-oriented storage system 9 to the file-oriented storage system 10.

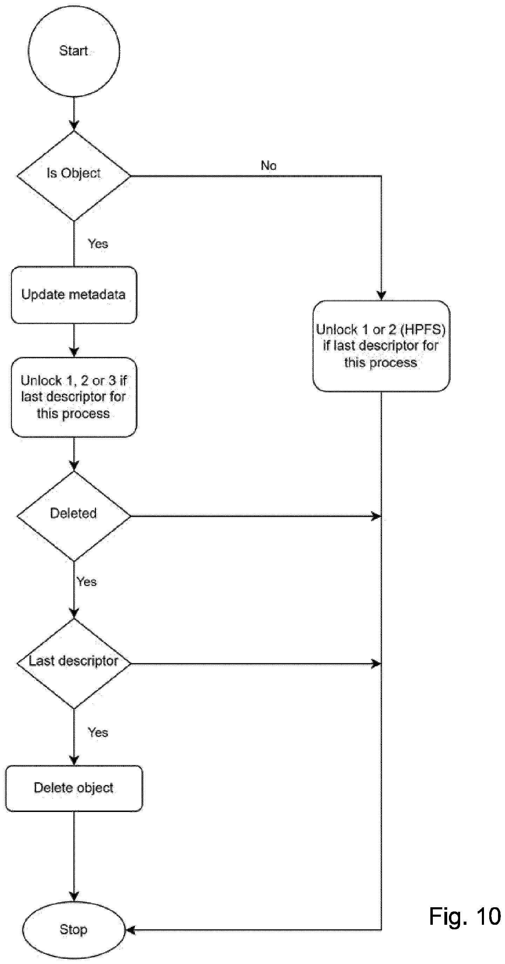

Figure 10 illustrates a Transition Diagram implemented by the processing apparatus 12 for closing a file. After starting the process, a query is made as to whether the file to be closed is an object (i.e., from object-oriented storage). If it is not, then any file locks in reserved byte position 1 or 2 are unlocked on the file in the file-oriented storage system (referred to as "HPFS" in figure 10) if they are the last descriptors for the process, and the process then stops. Otherwise, the process proceeds to update the metadata associated with the file, and the to unlock any file locks in reserved byte position 1 or 2 or 3 if they are the last descriptors for the process. It is then determined if the file is to be deleted (i.e., is marked as pending deletion, e.g., via a file descriptor), and if it is not to be deleted then the process stops. Otherwise, the object is deleted conditional on the final descriptor of the file having been reached.

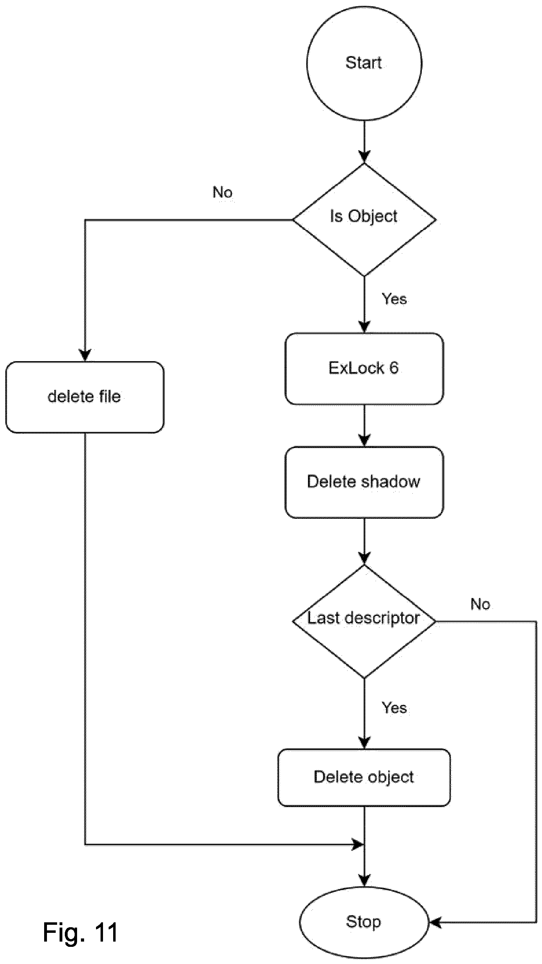

Figure 11 illustrates a Transition Diagram implemented by the processing apparatus 12 for deleting a file. After starting the process, a query is made as to whether the file to be deleted is an object (i.e., from object-oriented storage). If it is not, then the file (in the file-oriented system) is deleted, and the process then stops. Otherwise, the process proceeds to apply to the file a file lock in reserved byte position 6 of the file within the object-based storage system. The corresponding file (i.e., shadowing file) within the file-oriented storage system is then deleted. It is then determined if the final descriptor of the file has been reached. If not, then the process stops. Otherwise, the object containing the data of the file is deleted.

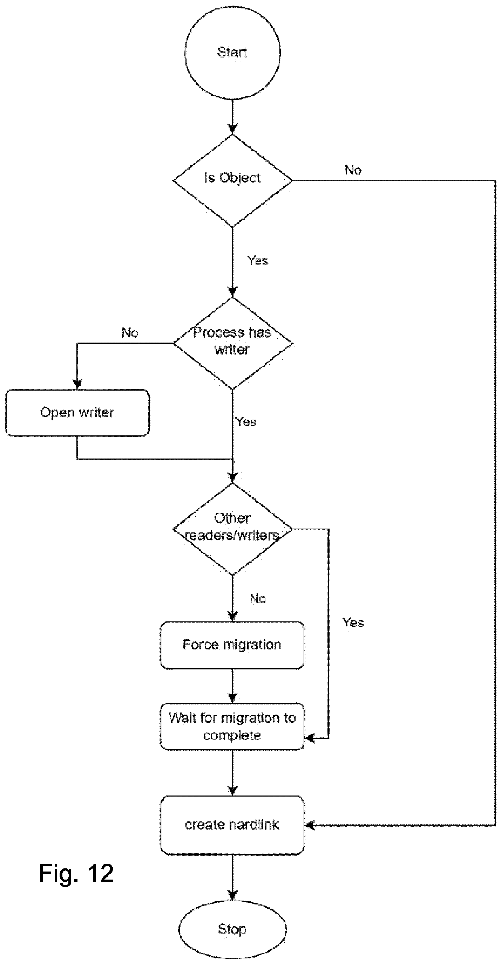

Figure 12 illustrates a Transition Diagram implemented by the processing apparatus 12 for creating a hardlink to a file. After starting the process, a query is made as to whether the file for which a hardlink is to be created is an object (i.e., from object-oriented storage). If it is not, then a hardlink is created for the file (in the file-oriented system). Otherwise, it is determined if the process at hand has a writer open and if it does not a writer is opened for it. The process continues by determining whether other read or write processes are operating on the file. If none are, then migration 17 of the file from object-oriented storage to file-oriented storage occurs. If there are other readers or writers, the process waits for the migration initiated by the presence of at least one writer and one reader to complete. Once migration has completed, a hardlink is then created for the file whilst within the file-oriented storage system.

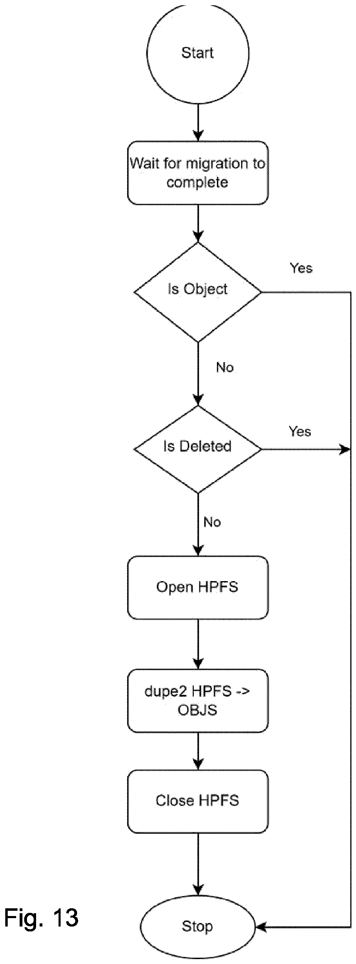

Figure 13 illustrates a Transition Diagram implemented by the processing apparatus 12 for reopening a file for reading or writing or truncating or flushing or allocating. The process begins by waiting for a migration of a file to complete. Next, a query is made as to whether the file for which the process is to be applied is an object (i.e., from object-oriented storage). If it is, then the process stops. Otherwise, it is determined whether the file is to be deleted (e.g., pending deletion). If it is, then the process stops. Otherwise, a file is opened in the file-oriented storage system 10 (referred to as "HPFS" in figure 13). The dup2() function (as would be readily understood by the person skilled in the art) is then applied to duplicate an open file descriptor. The duplicated descriptor is then closed, and the process stops

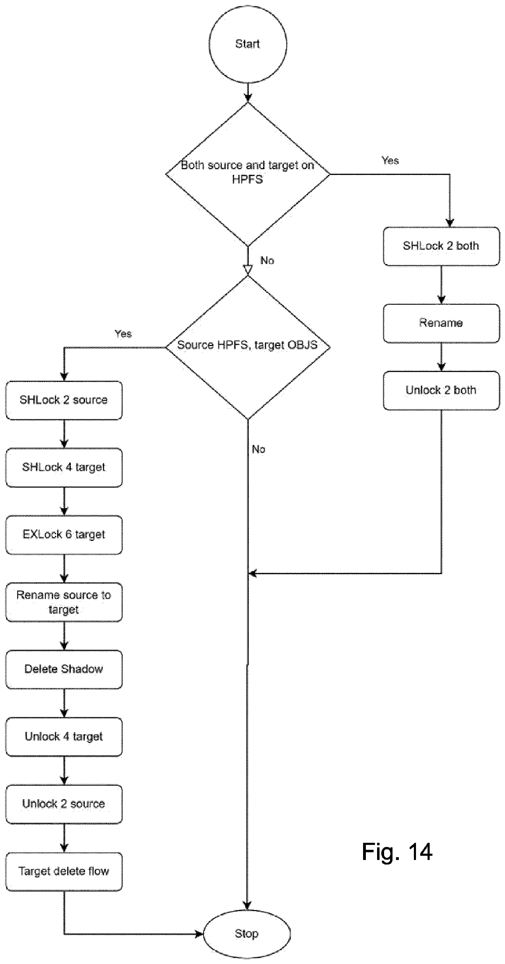

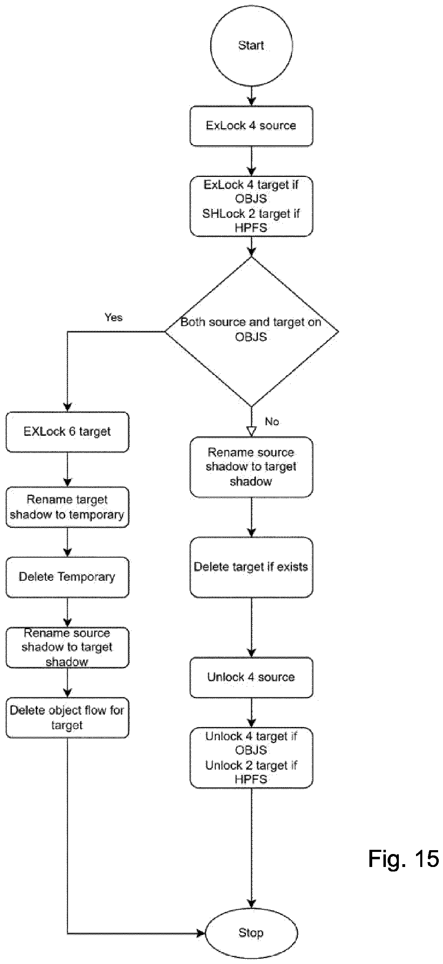

Figures 14 and 15 each illustrate a Transition Diagram implemented by the processing apparatus 12 for renaming a file. Referring to both Figure 14 and 15, if the source file resides in the object store and is in use by other processes, it is first moved to the file-oriented storage system and the process waits until all other processes complete reopening the file before proceeding with the rename in accordance to the Figures 14 and 15. Referring to both Figure 14 and 15, if the destination file resides in the object store and is in use by other processes, it is first moved to the file-oriented storage system and the process waits until all other processes complete reopening the file before proceeding with the rename in accordance to the Figures 14 and 15.

Referring to Figure 14, after starting the process, a query is made as to whether both the source file and the target file are to reside on the file-oriented storage system 10 (referred to as "HPFS" in figure 14). If yes, then the process proceeds by applying to both the target and source files a file lock in reserved byte position 2 of the respective files within the file-based storage system 10, and then the renaming proceeds and the file lock is thereafter unlocked on both the target and source files. The process then stops. Otherwise, a query is made as to whether the source file and the target file reside, respectively, on the file-oriented storage system 10 and the object-oriented storage system 9 (referred to as "OBJS" in figure 14). If not, then the process stops. But, if yes, then the process proceeds by applying to the source file a file lock in reserved byte position 2 and applying to the target file a file lock in reserved byte position 4 and then applying to it a file lock in reserved byte position 6. Next, the process renames the source file to the target file name. The corresponding file (i.e., shadowing file) is then deleted, and the file lock at reserved byte positions 4 and then 2 are unlocked in that order. The process subsequently stops.

Referring to Figure 15, after starting the process, the process proceeds by applying to the source file a file lock in reserved byte position 4, and then applies to the target file a file lock in reserved byte position 4 if it resides in the object-oriented storage system 9 (referred to as "OBJS" in figure 15) or applies to it a file lock in reserved byte position 2 if the target file resides on the file-oriented storage system 10 (referred to as "HPFS" in figure 15). Next a query is made as to whether both the target file and the source file reside on the object-oriented storage system 9. If yes, then an exclusive file lock in reserved byte position 6 of the target file is applied to that file. Next, a step of renaming the target file occurs, and the corresponding (shadowing) file is renamed to a target shadowing file name. The process subsequently stops.

Else, if it is not the case that both the target file and the source file reside on the object-oriented storage system 9, then the process proceeds by renaming the source shadowing file to the target shadowing file name. Subsequently, the file lock in reserved byte position 4 of the target file is unlocked if it resides in the object-oriented storage system 9 or the file lock in reserved byte position 2 of the target file is unlocked if the target file resides on the file-oriented storage system.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A file storage system implemented by a computer for storing files comprising data and associated metadata, the file storage system comprising:
a file-oriented storage system comprising a storage medium configured to store metadata of said files within a hierarchical file structure therein;
an object-oriented storage system comprising a storage medium configured to store said data of said files as objects therein;
a processor configured to anticipate a use of a stored file via the file-oriented storage system and to:
migrate to the object-oriented storage system the data of the file if such use is not anticipated thereby storing the data of the file within the object-oriented storage system instead of within the file-oriented storage system; or,
migrate to the file-oriented storage system the data of the file if such use is anticipated thereby storing the data of the file within the file-oriented storage system instead of within the object-oriented storage system.

2. A file storage system according to any preceding claim wherein the processor is configured to anticipate a use via the file-oriented storage system of a stored file according to a file access pattern of the file, and/or according to an attribute of the file.

3. A file storage system according to any preceding claim wherein the processor is configured .
such that when an application requests to access a file for which the data of the file is stored on the object-oriented storage system, then:
the data of the file is directly retrieved from the object-oriented storage system and passed to the application; and/or,
the metadata of the file is retrieved from the file-oriented storage system and passed to the application.

4. A file storage system according to any preceding claim further comprising a metadata cache, wherein the processor is configured such that if the data of the file is migrated to the object-oriented storage system, then a corresponding entry is created in the metadata cache that comprises metadata of the file and/or a pointer to the location of an object within the object-oriented storage system containing the data of the file.

5. A file storage system according to any preceding claim when dependent upon claim 4 wherein the processor is configured such that when an application requests to access a metadata of file for which the data of the file is stored on the object-oriented storage system, the metadata of the file is retrieved from the metadata cache and passed to the application.

6. A file storage system according to any preceding claim wherein the processor is configured to:
refer to a record of file extensions of files that previously have been used via the file-oriented storage system;
anticipate a use of a file via the file-oriented storage system if a file extension of the file corresponds to a recorded file extension.

7. A file storage system according to any preceding claim wherein the processor is configured such that if the data of the file is migrated to the object-oriented storage system, then a corresponding file is created in the file-oriented storage system that comprises a pointer to the location of an object within the object-oriented storage system containing the data of the file.

8. A file storage system according to claim 5 wherein said corresponding file comprises metadata corresponding to the data of the file within the object.

9. A file storage system according to claim 5 or claim 6 wherein said corresponding file comprises file regions configured to contain information indicating a file lock status of the file.

10. A computer-implemented method for storing files comprising data and associated metadata, the method comprising:
providing a file-oriented storage system comprising a storage medium and storing metadata of said files within a hierarchical file structure therein;
providing an object-oriented storage system comprising a storage medium configured to store said data of said files as objects therein;
anticipating a use via the file-oriented storage system of a stored file; and
migrating to the object-oriented storage system the data of the file if such use is not anticipated thereby storing the data of the file within the object-oriented storage system instead of within the file-oriented storage system; or,
migrating to the file-oriented storage system the data of the file if such use is anticipated thereby storing the data of the file within the file-oriented storage system instead of within the object-oriented storage system.

11. A computer-implemented method according to claim 9 wherein said anticipating comprises anticipating a use via the file-oriented storage system of a stored file according to a file access pattern of the file, and/or according to an attribute of the file.

12. A computer-implemented method according to claim 9 to 11 wherein , when an application requests to access a file for which the data of the file is stored on the object-oriented storage system, the method comprises:
retrieving the data of the file directly from the object-oriented storage system and passing the retrieved data of the file to the application; and/or,
retrieving the metadata of the file from file-oriented storage system and passing the retrieved metadata to the application.

13. A computer-implemented method according to any of claims 9 to 11 comprising:
refer to a record of file extensions of files that previously have been used via the file-oriented storage system;
wherein said anticipating comprises anticipating a use of a file via the file-oriented storage system if a file extension of the file corresponds to a recorded file extension.

14. A computer-implemented method according to any of claims 9 to 12 wherein, if the data of the file is migrated to the object-oriented storage system, then creating a corresponding file in the file-oriented storage system that comprises a pointer to the location of an object within the object-oriented storage system containing the data of the file.

15. A computer-implemented method according to claim 13 wherein said corresponding file comprises metadata corresponding to the data of the file within the object; and/or, said corresponding file comprises file regions configured to contain information indicating a file lock status of the file.
